# EUROPEAN PATENT APPLICATION

(11) **EP 2 360 522 A1**
(43) Date of publication of application: **24.08.2011**
(21) Application number: 10152476.7
(22) Date of filing: 03.02.2010
(51) Int. Cl.: G03B 21/00, G03H 3/00, H04N 5/74, G03H 1/00, G02B 5/32, G03H 1/08, G03H 1/22, F21V 5/00, G11B 23/40

(54) **Illumination apparatus for illuminating an object**

(71) Applicant: Koninklijke Philips Electronics N.V., 5621 BA Eindhoven (NL)
(72) Inventor: The designation of the inventor has not yet been filed
(74) Representative: Pelzer, Heiko

(57) **Abstract**

The invention relates to an illumination apparatus (1) for illuminating an object (2) with an illumination pattern, in particular for decorative lighting. The apparatus comprises a first light device (3) for generating a first light beam (4) and an optical medium (5) comprising a diffractive optical element (6), wherein the diffractive optical element (6) is adapted to generate a first illumination pattern (11) and wherein the first light device (3) and the optical medium (5) are arranged such that the first light beam (4) is directed to the diffractive optical element (6) for generating the first illumination pattern (11) on the object (2). A diffractive optical element can be written onto an optical medium such that the diffractive optical element has sub-micron features, thereby allowing to increase the spatial resolution of the illumination on the object in comparison to using a LC-SLM or a LCoS for illuminating an object.

## Description

### FIELD OF THE INVENTION

The invention relates to an illumination apparatus, illumination method and illumination computer program for illuminating an object. The invention relates further to an optical medium writing apparatus, optical medium writing method and optical medium writing computer program.

### BACKGROUND OF THE INVENTION

Illumination apparatuses producing various lighting effects are used in hospitality applications such as in hotels and restaurants as well as in atmosphere creation at homes, hospitals, museums and in shop lighting concepts. Light produced by a laser is directed to a diffractive optical element (DOE) for producing an illumination pattern for illuminating an object. Pixelated micro-displays such as liquid crystal spatial light modulators (LC-SLM) or liquid crystal on silicon (LCoS) allow the implementation of DOEs by feeding the display with computer data in real time, which is technology called computer generated holography.

The LC-SLM has a typical pixel size of about 20 to 40 µm and the LCoS has typically a pixel size of about 4 to 10 µm. These pixel sizes lead to relatively low spatial resolutions of the illumination pattern.

### SUMMARY OF THE INVENTION

It is an object of the present invention to provide an illumination apparatus, illumination method and illumination computer program for illuminating an object with an illumination pattern, which allow generating illumination patterns having an increased spatial resolution. It is a further object of the present invention to provide an optical medium writing apparatus, optical medium writing method and optical medium writing computer program, which produce an optical medium, which can be used for generating illumination patterns having an increased spatial resolution.

In a first aspect of the present invention an illumination apparatus for illuminating an object with an illumination pattern is presented, wherein the illumination apparatus comprises:
- a first light device for generating a first light beam,
- an optical medium comprising a diffractive optical element, wherein the diffractive optical element is adapted to generate a first illumination pattern,
wherein the first light device and the optical medium are arranged such that the first light beam is directed to the diffractive optical element for generating the first illumination pattern on the object.

A diffractive optical element can be written onto an optical medium such that the diffractive optical element has sub-micron features. The size of the features of the diffractive optical element can therefore be reduced by using an optical medium comprising a diffractive optical element instead of using a LC-SLM or a LCoS. This leads to an increased spatial resolution of the illumination pattern. The illumination apparatus allows therefore to illuminate an object with an illumination pattern having an increased spatial resolution.

The illumination apparatus is preferentially adapted to be used for decorative lighting, in particular, for home use.

The object is, for example, an inner or outer wall of a building, a screen, a product which should be illuminated for advertising purposes, et cetera. In particular, the object is, for example, a display in a shop, which can be illuminated for highlighting items for sale, in order to attract customers. The objet can also be a wall in a hotel or a restaurant for creating a desired atmosphere. The object can also be a ceiling or a wall of a waiting room, examination room or of an operating theatre in a hospital.

The first light device comprises preferentially a laser for generating a laser beam.

Preferentially, the illumination apparatus comprises an expansion unit for expanding the first light beam before meeting the diffractive optical element. The first light device and the optical medium are preferentially adapted such that the first light beam meets only a part of the optical medium comprising the diffractive optical element.

The optical medium is preferentially an optical disc. The optical disc is preferentially adapted to be rotatable about a rotational axis, in particular, for writing purposes. The optical disc is preferentially a CD, DVD or another CD-like storing medium like a HD DVD, Blu-ray disc, et cetera.

It is preferred that the diffractive optical element comprises a sub-micron pattern, wherein the first light device and the optical medium are adapted such that the maximum diffraction angle for red light is larger than 10 degrees and further preferred larger than 20 degrees. Such a diffractive optical element allows obtaining a small and compact illumination apparatus.

The first light device and the optical medium can be arranged such that the first light beam is reflected by the diffractive optical element and the reflected first light beam is directable to the object for generating the first illumination pattern on the object. Thus, the illumination apparatus can be adapted to be operated in a reflection mode.

The first light device and the optical medium can also be adapted such that the first light beam traverses the diffractive optical element and, after having traversed the diffractive optical element, is directable to the object for generating the first illumination pattern on the object. Thus, the illumination apparatus can be adapted to be operated in a transmissive mode.

It is further preferred that the illumination apparatus comprises a diffractive optical element calculator for calculating the diffractive optical element depending on a predefined first illumination pattern, wherein the first light device is adapted to write the diffractive optical element onto the optical medium. Especially in this case the optical medium is rewritable such that the diffractive optical element can be adjusted to the actually predefined, i.e. actually desired, first illumination pattern.

The diffractive optical element calculator is, for example, a personal computer, and can be adapted to generate a computer generated hologram (CGH) as a diffractive optical element. The diffractive optical element calculator can be adapted to Fourier transform the predefined first illumination pattern for calculating the diffractive optical element.

The first light device can comprise two first light sources, in particular, two lasers, one for writing the diffractive optical element on the optical medium and another for illuminating the optical medium for generating the first illumination pattern. However, the first light device can also be adapted to use the same light source, in particular, the same laser, for writing the diffractive optical element and for generating the first illumination pattern.

As already mentioned above, the optical medium is preferentially a CD or DVD, and existing CD/DVD writing technologies are preferentially used for producing the optical medium with the diffractive optical element. The optical medium comprises preferentially a layer of a phase change material, wherein during writing a focused writing laser beam changes the phase in the phase change material for writing the diffractive optical element.

The diffractive optical element calculator is preferentially adapted to transform the calculated diffractive optical element into a spiral sequence of light intensities, which result in the calculated diffractive optical element, if the first light device writes on the optical medium in accordance with this spiral sequence, wherein the first light device is adapted to illuminate the optical medium along a spiral track in accordance with the spiral sequence for writing the diffractive optical element onto the optical medium. This allows using existing CD/DVD writing technologies for producing the optical medium with the diffractive optical element in a simple way.

It is preferred that the illumination apparatus further comprises a second light device generating a second light beam for illuminating the object with a second illumination pattern. The second light device comprises preferentially a light emitting diode (LED). The first illumination pattern and the second illumination pattern can be adapted to complement each other for generating a complemented illumination pattern on the object. For example, the first illumination pattern can be generated by using a laser for generating contours, for example, with sharp lines and/or points, whereas the second illumination pattern can be generated by other light sources likes LEDs for providing colors filling out the contours.

The first illumination pattern, the second illumination pattern and/or the complemented illumination pattern can generate an image of an object like a flower or the like.

It is further preferred that the second light device and the optical medium are arranged such that the second light beam illuminates the object without meeting the diffractive optical element. This allows avoiding unwanted diffraction effects of the second light beam induced by the diffractive optical element.

It is further preferred that the optical medium comprises a first part comprising the diffractive optical element for being illuminated by the first light beam and a second part for being illuminated by the second light beam. The second part is preferentially adapted to allow the second light beam to only transmit through the second part. This allows an arrangement of the optical medium and the second light device such that the second light beam transmits the optical medium before illuminating the object, without being influenced by the diffractive optical element. In particular, unwanted diffractions of the second light beam by the diffractive optical element can be avoided.

It is further preferred that the second part comprises an imaging pattern for generating an image on the object as the second illumination pattern, if the second part is illuminated by the second light beam. In particular, by illuminating the second part of the optical medium by the second light beam a projection image can be generated on the object. The imaging pattern comprises preferentially transparent and scattering and/or diffracting areas.

After having traversed the optical medium, the second light beam is preferentially imaged by a projection lens onto the object, wherein a part of the second light beam being out of the acceptance angle of the projection lens will not be projected onto the object, but can, depending on the dimensions of the object, still reach the object, thereby preventing a loss of light. In this way a contrast on the object can be generated between the projected part of the second light beam and the non-projected part of the second light beam. This contrast can be determined by the divergence of the second light beam, after having traversed the optical medium, in particular, by a degree of scattering of the second light beam at the optical medium, and by the acceptance angle of the projection lens. That means this contrast can be set by choosing the divergence and the acceptance angle as desired.

It is further preferred that the illumination apparatus comprises an imaging pattern calculator for calculating the imaging pattern depending on a predefined second illumination pattern, wherein the first light device is adapted to write the imaging pattern onto the optical medium. Also in this case the optical medium is preferentially rewritable such that the imaging pattern can be adjusted to the actually desired second illumination pattern. Moreover, preferentially existing CD/DVD writing technologies are also used for writing the imaging pattern onto the optical medium.

It is further preferred that the second light device is adapted to generate several second light beams having different colors, which are directed to the second part of the optical medium for generating a colored illumination of the object as the second illumination pattern. In an embodiment, the second light device comprises a red light source emitting a red second light beam, a green light source emitting a green second light beam and a blue light source emitting a blue second light beam, wherein the red second light beam, the green second light beam and the blue second light beam are directed to the second part of the optical medium for generating a colored illumination of object.

It is further preferred that the second part of the optical medium comprises several scattering patterns corresponding to the several second light beams having different colors, wherein the illumination apparatus further comprises several projection lenses corresponding to the several second light beams, wherein each projection lens is adapted to project the corresponding second light beam onto the object, after having traversed the corresponding scattering pattern. If the first light device is a laser device and the second light device is a LED device, the first illumination pattern generated by the laser light comprises preferentially sharp lines and/or points, wherein the second illumination pattern generated by the LED light can provide low resolution contrast images projected onto a surface of the object.

The illumination apparatus can comprise further optical elements for influencing the illumination pattern, for example, lenses and reflectors for producing the desired lighting effect on the object. For example, the illumination pattern can be modified such that larger diffraction angles can be obtained, for instance, by using a lens. Moreover, a mirror, in particular, a shaped mirror, can be used for redirecting at least a part of the illumination pattern to a specific direction, and/or patterned optical elements can be used to redirect only specific light rays generating the illumination pattern.

In a further aspect of the present invention an optical medium writing apparatus is presented, wherein the optical medium writing apparatus comprises:
- a diffractive optical element calculator for calculating a diffractive optical element depending on a predefined first illumination pattern, the diffractive optical element being adapted to generate the predefined first illumination pattern for illuminating an object, when the diffractive optical element is illuminated with a light beam,
- a light device for writing the diffractive optical element onto the optical medium.

In a further aspect of the present invention an illumination method for illuminating an object with an illumination pattern is presented, wherein the illumination method comprises:
- generating a first light beam by a first light device,
- providing an optical medium comprising a diffractive optical element, wherein the diffractive optical element is adapted to generate a first illumination pattern,
- directing the first light beam to the diffractive optical element for generating the first illumination pattern on the object.

In a further aspect of the present invention an optical medium writing method is presented, wherein the optical medium writing method comprises:
- calculating a diffractive optical element depending on a predefined first illumination pattern, the diffractive optical element being adapted to generate the predefined first illumination pattern for illuminating an object, when the diffractive optical element is illuminated with a light beam, by a diffractive optical element calculator,
- writing the diffractive optical element onto the optical medium by a light device.

In a further aspect of the present invention an illumination computer program for illuminating an object with an illumination pattern is presented, wherein the computer program comprises program code means for causing an illumination apparatus as defined in claim 1 to carry out the steps of the illumination method as defined in claim 11, when the computer program is run on a computer controlling the illumination apparatus.

In a further aspect of the present invention an optical medium writing computer program is presented, wherein the computer program comprises program code means for causing an optical medium writing apparatus as defined in claim 10 to carry out the steps of the optical medium writing method as defined in claim 12, when the computer program is run on a computer controlling the optical medium writing apparatus.

It shall be understood that the illumination apparatus of claim 1, the optical medium writing apparatus of claim 10, the illumination method of claim 11, the optical medium writing method of claim 12, the illumination computer program of claim 13 and the optical medium writing computer program of claim 14 have similar and/or identical preferred embodiments, in particular, as defined in the dependent claims.

It shall be understood that a preferred embodiment of the invention can also be any combination of the dependent claims with the respective independent claim.

These and other aspects of the invention will be apparent from and elucidated with reference to the embodiments described hereinafter.

### BRIEF DESCRIPTION OF THE DRAWINGS

In the following drawings:
- Fig. 1: shows schematically and exemplarily an embodiment of an illumination apparatus for illuminating an object,
- Fig. 2: shows schematically and exemplarily an arrangement for illuminating the object with a first illumination pattern in a transmissive mode,
- Fig. 3: shows schematically and exemplarily an arrangement illustrating a writing procedure,
- Figs. 4 and 5: show different ways of writing a calculated diffractive optical element onto an optical medium,

- Figs. 6 and 7: show schematically and exemplarily arrangements of laser dots used for writing and illumination purposes on the optical medium,
- Fig. 8: schematically and exemplarily illustrates the generation of a projection image as a second light pattern,
- Fig. 9: shows schematically and exemplarily an arrangement for generating a colored illumination pattern,
- Fig. 10: shows schematically and exemplarily another arrangement for generating a colored illumination pattern,
- Fig. 11: shows schematically and exemplarily a further embodiment of an illumination apparatus for illuminating an object in a reflective mode,
- Fig. 12: shows schematically and exemplarily an arrangement for illuminating the object with a first illumination pattern in a reflective mode,
- Fig. 13: shows schematically and exemplarily a layer structure of an optical medium,
- Figs. 14 to 18: exemplarily illustrate preferred uses of the lighting apparatus, and
- Fig. 19: shows a flowchart exemplarily illustrating an embodiment of an illumination method for illuminating an object.

### DETAILED DESCRIPTION OF EMBODIMENTS

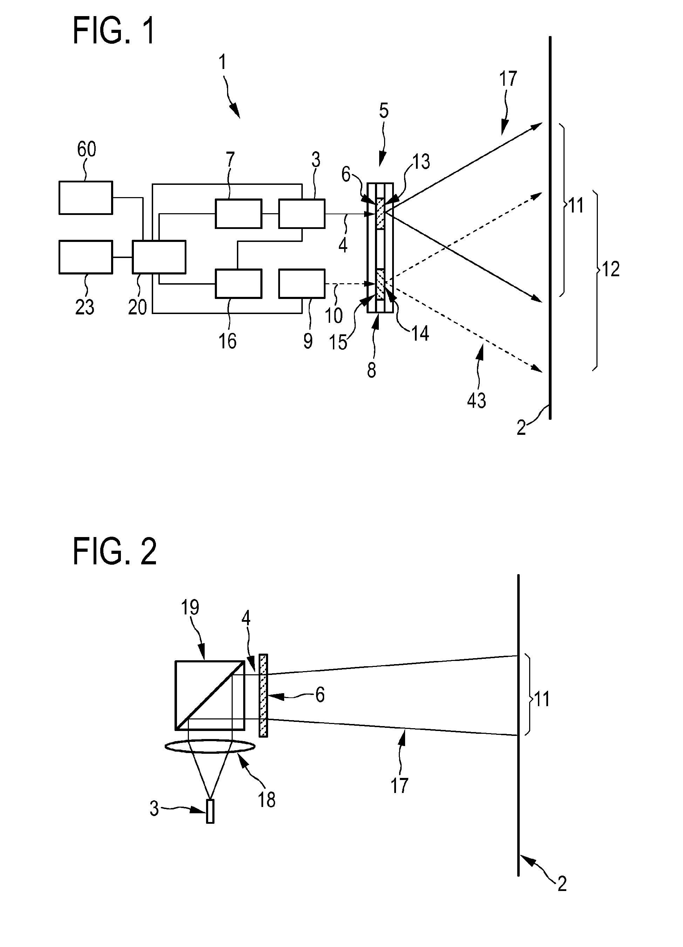

Fig. 1 shows schematically and exemplarily an illumination apparatus 1 for illuminating an object 2 with an illumination pattern. The illumination apparatus 1 comprises a first light device 3 for generating a first light beam 4 and an optical medium 5 comprising a diffractive optical element 6, wherein the diffractive optical element 6 is adapted to generate a first illumination pattern 11. The first light device 3 and the optical medium 5 are arranged such that the first light beam 4 is directed to the diffractive optical element 6 for generating the first illumination pattern 11 on the object 2. The illumination apparatus 1 is adapted to be used for decorative lighting, in particular, for home use. The object 2 is, for example, an inner or outer wall of a building, a screen, a product which should be illuminated for advertising purposes, et cetera, wherein the illumination apparatus is adapted to decoratively illuminate this object.

The first light device 3 comprises a laser for generating a laser beam being the first light beam 4. In this embodiment, the optical medium is a CD. However, in other embodiments the optical medium can also be another medium like another CD-like storing medium, for example, a DVD, HD DVD, Blu-ray disc, et cetera.

The diffractive optical element 6 comprises a sub-micron pattern, i.e. a pattern having features with sub-micron dimensions, wherein the first light device 3 and the optical medium 5 are preferentially adapted such that the maximum diffraction angle is larger than 5 degrees, further preferred larger than 10 degrees and even further preferred larger than 20 degrees. In this embodiment, the first light device 3 and the optical medium 5 are adapted such that the first light beam 4 transmits the diffractive optical element 6 and the transmitted first light beam 17 is directable to the object 2 for generating the first illumination pattern 11 on the object 2. Thus, the illumination apparatus 1 is adapted to be operated in a transmissive mode in this embodiment. Fig. 1 is a very coarse schematic figure. More details of a possible arrangement of some elements of the illumination apparatus in the transmissive mode are shown in Fig. 2.

As can be seen in Fig. 2, the first light beam 4 is preferentially expanded by using the divergence of the first light beam 4 and collimated by a lens 18 before being directed onto the diffractive optical element 6 by using a redirection element 19. The first light device 3, the lens 18, the redirection element 19 and the optical medium with the diffractive optical element 6 are preferentially adapted such that the expanded first light beam meets only the part of the optical medium 5 comprising the diffractive optical element 6. The lighting apparatus can also comprise an expansion unit for expanding the first light beam for being directed onto the diffractive optical element 6, wherein also in this case the first light beam is expanded such that it meets only the part of the optical medium 5 comprising the diffractive optical element 6.

The illumination apparatus 1 further comprises a diffractive optical element calculator 7 for calculating the diffractive optical element 6 depending on a desired first illumination pattern, wherein the first light device 3 is adapted to write the diffractive optical element 6 onto the optical medium 5. Especially in this case the optical medium 5 is preferentially rewritable such that the diffractive optical element 6 can be adjusted to an actually desired first illumination pattern. The diffractive optical element calculator 7 is adapted to Fourier transform the desired first illumination pattern, in order to generate a computer generated hologram as the diffractive optical element. The computer generated hologram is transmitted to the first light device 3 for writing the computer generated hologram onto the optical medium 5.

The illumination apparatus 1 can be operated in two modes, an illumination mode in which the first light device illuminates the optical medium for generating a first illumination pattern with an arrangement shown, for example, in Fig. 2, and a writing mode in which the first light device can write the diffractive optical element onto the optical medium 5. The illumination apparatus 1 preferentially comprises an input unit 23 allowing a user to indicate whether the illumination apparatus 1 should be operated in the illumination mode or in the writing mode. The input unit is, for example, a button which has to be pressed, a slide control, a keyboard, et cetera. The input unit 23 is connected to an illumination apparatus control unit 20 for controlling the different units of the illumination apparatus 1.

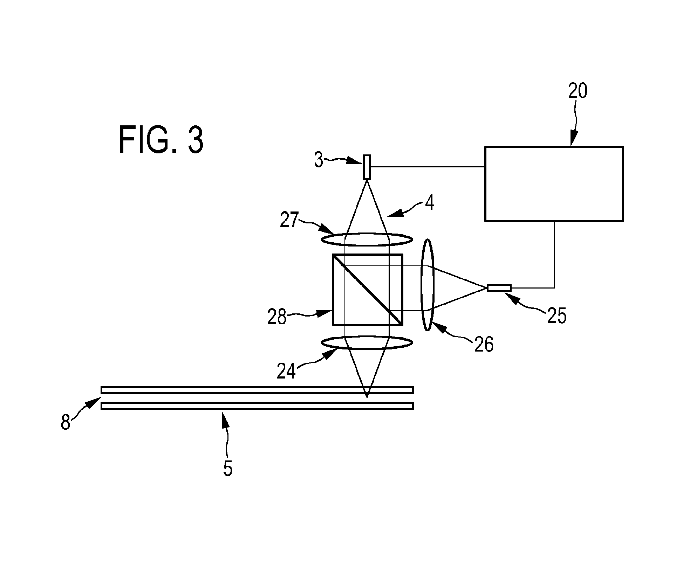

Fig. 3 shows schematically and exemplarily an arrangement preferentially used in the writing mode. The first light device 3 generates the first light beam 4 which is focused into the phase change layer 8 of the optical medium 5 by using lenses 24, 27. In other embodiments, also other focusing means can be used for focusing the first light beam 4 into the phase change layer 8. Light reflected by the phase change layer 8 and/or a reflecting layer of the optical medium is redirected by a redirection element 28 to a photodiode 25 via a lens 26. The photodiode 25 measures the intensity of the reflected light for feedback control. The first light device 3 and the photodiode 25 are connected to the illumination apparatus control unit 20 for controlling the writing process in accordance with the calculated computer generated hologram. The illumination apparatus 1 preferentially comprises a rearrangement and moving unit for modifying the configuration of the illumination apparatus in correspondence with the selected mode of operation, i.e. the writing mode or the illumination mode.

The diffractive optical element calculator 7 is adapted to transform the calculated diffractive optical element into a spiral sequence of light intensities which result in the calculated diffractive optical element, if the first light device 3 writes on the optical medium 5 in accordance with this spiral sequence. The illumination apparatus is adapted to illuminate the optical medium 5 along a spiral track in accordance with the spiral sequence for writing the diffractive optical element 6 onto the optical medium 5 by using existing CD/DVD writing technologies for producing the optical medium 5 with the diffractive optical element 6.

The optical medium preferentially comprises a phase change material, wherein during writing a focused writing laser beam of the first light device selectively heats areas of the phase change material above a melting temperature such that the atoms in these areas can move rapidly in a liquid state. Then, if cooled sufficiently quickly, a random liquid state is "frozen in" and a so-called amorphous state is obtained. The amorphous version of the material shrinks and leaves a pit where the laser has written, resulting in a recognizable surface of the optical medium. The writing laser beam or another laser beam of the first light device can be used to heat the phase change material to a temperature below the melting temperature, but above the crystallization temperature, for a sufficient time being at least longer than a minimum crystallization time, thereby reverting the atoms back to an ordered state, i.e. the crystalline state, for erasing the diffractive optical element. Writing takes preferentially place in a single pass of a focus laser beam; this is sometimes referred to as "direct overwriting" and the process can be repeated several thousand times per optical medium. It is also possible to use phase change material which is based on a change in the refractive index of the phase change material. Moreover, the optical medium can also be adapted to be writable only a single time, wherein in this case a layer, in which the information is written, is preferentially used, which can absorb the wavelength of the laser light used for writing. Upon heating such a layer with the laser light for writing, bumps and pits can be formed for generating the diffractive optical element. Also other known CD/DVD writing technologies can be used for producing the optical medium with the diffractive optical element. The layers of the optical medium, in which the diffractive optical element is written, have preferentially a low absorption for the laser light, which is used for generating the first illumination pattern, such that this laser light does substantially not influence the diffractive optical element.

Optical discs generally contain pregrooves, which are used for following a writing track during writing the optical disc. These pregrooves can also be used by the present illumination apparatus for following the spiral track. However, also optical media can be used, which do not comprise these pregrooves.

If the optical disc should be used in a reflective mode, the optical disc comprises preferentially a reflecting layer, and, if the optical disc should be used in a transmissive mode, the optical disc does preferentially not comprise the reflecting layer.

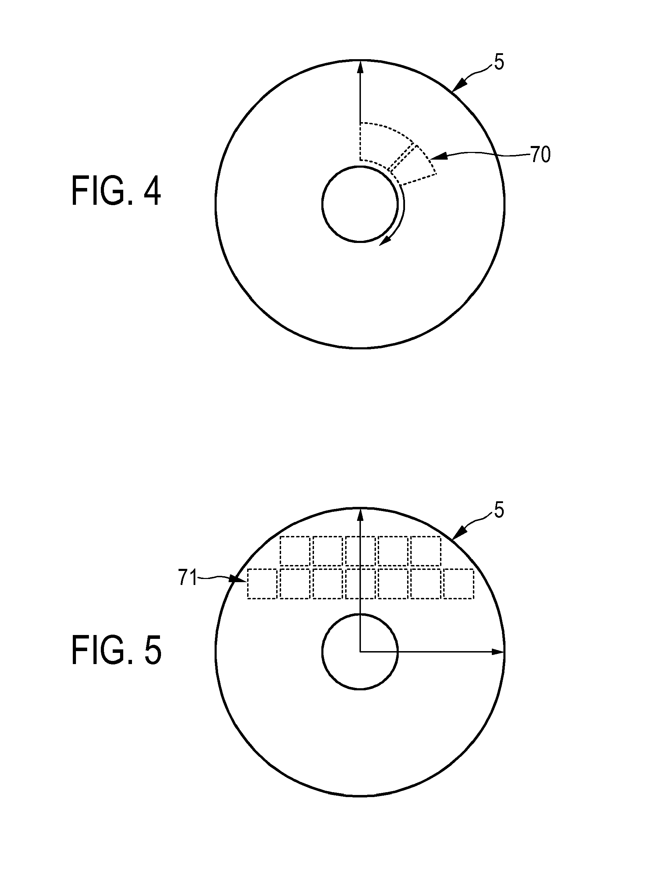

Fig. 4 shows schematically and exemplarily an embodiment of the optical medium 5 with diffractive optical elements, which have been written in areas 70 having curved edges, and Fig. 5 shows schematically exemplarily an embodiment of the optical medium 5, wherein diffractive optical elements have been written in squared regions 71.

The illumination apparatus is preferentially adapted to not rotate the optical medium, which is preferentially an optical disc, while generating the first illumination pattern in order to ensure that the first light beam constantly traverses the diffractive optical element. However, the illumination apparatus can also be adapted to rotate the optical medium during illuminating the optical medium for generating the first illumination pattern, in order to allow the first light beam to traverse different diffractive optical elements for generating a moving first illumination pattern.

The first light device 3 can be adapted to use the same first light source for writing the diffractive optical element 6 and for generating the first illumination pattern, or the first light device can comprise two or more first light sources, in particular, two or more lasers, wherein at least one first light source is adapted for writing the diffractive optical element on the optical medium and at least one other first light source is adapted to illuminate the optical medium for generating the first illumination pattern. At least one of these first light sources can also be adapted to erase a diffractive optical element and/or the first light device 3 can comprise at least one further first light source for erasing a diffractive optical element.

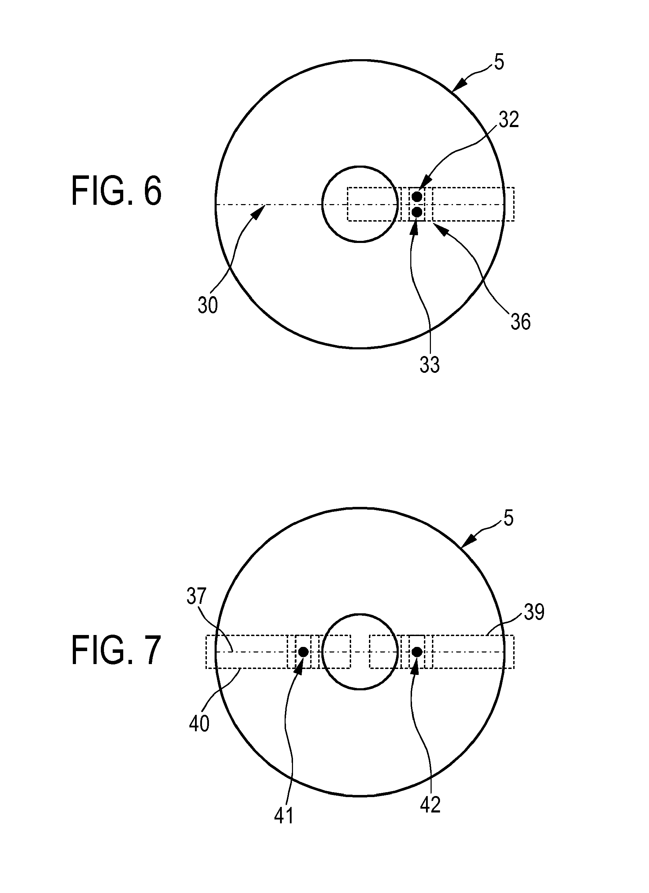

Fig. 6 schematically and exemplarily illustrates the writing of the optical medium and the generation of the first illumination pattern, if two lasers are used, a first laser for writing the diffractive optical element and a second laser for generating the first illumination pattern. In Fig. 6, the dot 32 indicates the illumination by the laser for writing the diffractive optical element and the dot 33 indicates the laser light used for generating the first illumination pattern. During writing, the optical medium 5 is rotated and the laser dot 32 is moved in a radial direction for writing along a spiral track. For moving the laser dot 32 in radial direction, a moving unit 36 can be used, which is movable along the radial track 30. For generating the first illumination pattern, the diffractive optical element is brought under the laser dot 33 by rotating the optical medium 5 and/or radially moving the laser dot 33 by using the moving unit 36 accordingly. Optics can be provided for projecting an image being the first illumination pattern on an object if the optical medium 5 comprises several diffractive optical elements and, if the laser light used for generating the first illumination pattern is modified from being used for illuminating a first diffractive optical element to being used for illuminating a second diffractive optical element, a suitable projection lens arrangement can be provided, in order to keep the position of the generated first illumination pattern constant. In an embodiment, not the laser light used for generating the first illumination pattern is modified for switching between different diffractive optical elements, but the optical medium is moved. In this case, the position of the first illumination pattern remains constant, if a switching is performed between different diffractive optical elements. The optical medium can be rotated or can be placed on an x-y stage, in order to move the optical medium such that the desired diffractive optical element is illuminated by the laser light.

Fig. 7 illustrates another arrangement for writing the optical medium and for generating the first illumination pattern. In Fig. 7, dot 41 indicates a laser dot used for writing the diffractive optical element and dot 42 indicates a laser dot used for generating the first illumination pattern by illuminating the diffractive optical element. Moving units 40, 39 are adapted to move the laser dots 41, 42 along a radial track 37. For writing the diffractive optical element along a spiral track, the optical medium 5 is preferentially rotated and the laser dot 41 is moved along the radial track 37. For generating the first illumination pattern the written diffractive optical element is brought under the laser dot 42 by rotating the optical medium 5 and/or radially moving the laser dot 42 by using the moving unit 39, wherein further optics can be provided for projecting the first illumination pattern onto a desired object. If the optical medium 5 comprises several diffractive optical elements and if the laser light used for generating the first illumination pattern is modified from being used for illuminating a first diffractive optical element to being used for illuminating a second diffractive optical element, a suitable projection lens arrangement can be provided, in order to keep the position of the generated first illumination pattern constant. In an embodiment, not the laser light used for generating the first illumination pattern is modified for switching between different diffractive optical elements, but the optical medium is moved. In this case, the position of the first illumination pattern remains constant, if a switching is performed between different diffractive optical elements. The optical medium can be rotated or can be placed on an x-y stage, in order to move the optical medium such that the desired diffractive optical element is illuminated by the laser light.

Referring again to Fig. 1, the illumination apparatus 1 further comprises a second light device 9 generating a second light beam 10 for illuminating the object 2 with a second illumination pattern 12. The second light device 9 comprises a LED. The first illumination pattern 11 and the second illumination pattern 12 can be adapted to complement each other for generating a complemented illumination pattern on the object 2. For example, the first illumination pattern 11 can be generated by using the first light device comprising preferentially a laser for generating contours, for example, with sharp lines and points, wherein the second illumination pattern generated by the LED can provide colors filling out the contours.

The second light device 9 and the optical medium 5 are arranged such that the second light beam 10 illuminates the object 2 without meeting the diffractive optical element 6. This allows avoiding unwanted diffraction effects of the second light beam 10 induced by the diffractive optical element 6.

The optical medium 5 comprises a first part 13 comprising the diffractive optical element 6 for being illuminated by the first light beam 4 and a second part 14 for being illuminated by the second light beam 10. The second part 14 is adapted to allow the second light beam 10 to only transmit through the second part 14. The second part can be a blank part, i.e. a part which does not comprise diffracting or scattering structures. This allows an arrangement of the optical medium and the second light device such that the second light beam transmits the optical medium before illuminating the object, without being substantially influenced by the optical medium. In particular, unwanted diffractions of the second light beam by the diffractive optical element can be avoided. However, in this embodiment the second part 14 comprises an imaging pattern 15 for generating an image on the object 2 as the second illumination pattern 12, if the second part 14 is illuminated by the second light beam 10. In particular, by illuminating the second part 14 of the optical medium 5 by the second light beam 10 a projection image can be generated on the object 2. The imaging pattern 15 preferentially comprises transparent and scattering and/or diffracting areas for generating the second illumination pattern 12, if the imaging pattern 15 is illuminated by the second light beam 10.

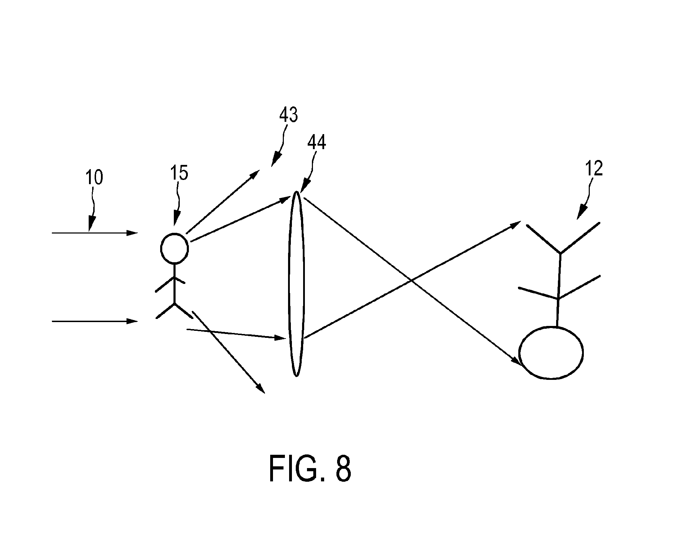

The transmitted second light beam 43, which has traversed the optical medium, is preferentially imaged by a projection lens 44, which is not shown in Fig. 1 for clarity reasons, but in Fig. 8. Fig. 8 schematically and exemplarily illustrates the generation of the second illumination pattern. The second light beam 10, which may be expanded by an expansion unit like an expansion lens system, is directed to the second part of the optical medium comprising the imaging pattern 15. Light is scattered and/or diffracted by the imaging pattern 15, and the part of the diffracted and/or scattered light being within the acceptance angle of the projection lens 44 is projected onto the object for generating the second illumination pattern 12 being a projected image in this embodiment. A part of the scattered and/or diffracted second light beam being out of the acceptance angle of the projection lens 44 will not be projected onto the object, but can, depending on the dimensions of the object, still reach the object, thereby preventing a loss of light. In this way a contrast on the object can be generated between the projected part of the second light beam and the non-projected part of the second light beam. This contrast can be determined by the divergence of the second light beam, after having traversed the optical medium, in particular, by the degree of scattering of the second light beam at the optical medium, and by the acceptance angle of the projection lens 44. That means this contrast can be set by choosing the divergence and the acceptance angle as desired.

The illumination apparatus 1 further comprises an image pattern calculator 16 for calculating the image pattern depending on a predefined second illumination pattern, wherein the first light device 3 is adapted to write the imaging pattern 15 onto the optical medium 5. As already mentioned above, the optical medium 5 can be rewritable such that the imaging pattern 15 can be adjusted to actually desired, i.e. predefined, second illumination patterns 12. Moreover, preferentially existing CD/DVD writing technologies are also used for writing the imaging pattern 15 onto the optical medium 5.

Also for calculating the imaging pattern 15 the predefined second illumination pattern, which would be generated on the object 2, is preferentially Fourier transformed.

For calculating the imaging pattern 15 and also for generating the diffractive optical element as a computer generated hologram known techniques can be used, which are based on Fourier transforming the first illumination pattern and the second illumination pattern, respectively. For example, the methods disclosed in the article "Computer Simulated Holography and Computer Generated Holograms" by S. Trester, American Journal of Physics, 64, pages 472-478 (April 1996), which is herewith incorporated by reference, can be used for generating a computer generated hologram.

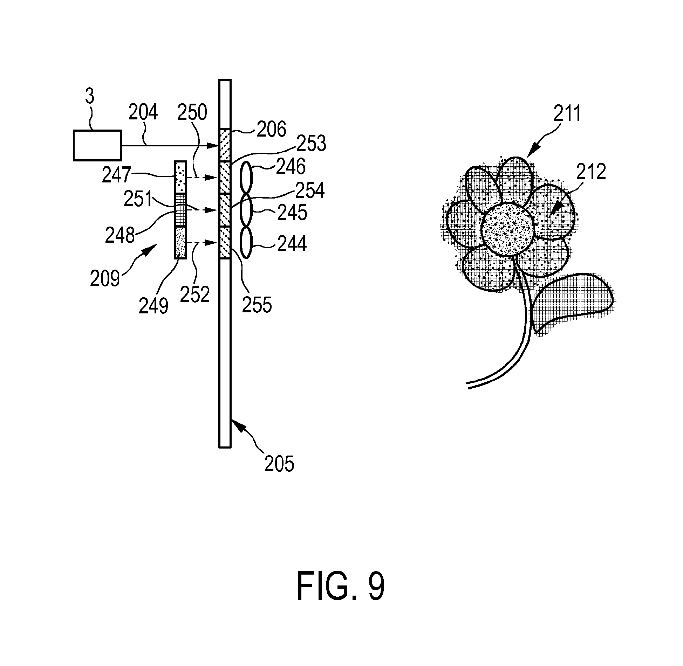

In an embodiment, the second light device can be adapted to generate several second light beams having different colors as schematically and exemplarily shown in Fig. 9. In Fig. 9, the second light device 209 comprises a red light source 247 emitting a red second light beam 250, a green light source 248 emitting a green second light beam 251 and a blue light source 249 emitting a blue second light beam 252, wherein the red second light beam 250, the green second light beam 251 and the blue second light beam 252 are directed to the second part of the optical medium 205 for generating a colored illumination of the object.

The second part of the optical medium 205 comprises several scattering patterns 253, 254, 255 corresponding to the several second light beams 250, 251, 252 having different colors. Several projection lenses 244, 245, 246, which correspond to the several second light beams 250, 251, 252, are adapted to project the corresponding second light beams 250, 251, 252 onto the object 2, after having traversed the corresponding scattering pattern 253, 254, 255. The second light sources 247, 248, 249 are preferentially LEDs, and the first light device 3 preferentially generates a laser beam being a first light beam 204, which illuminates a diffractive optical element 206 for generating a first illumination pattern 211. The first illumination pattern 211 comprises sharp lines forming, in this embodiment, a flower, and the second illumination pattern 212 has a lower spatial resolution and fills contours defined by the sharp lines of the first illumination pattern with colors.

Referring again to Fig. 1, the illumination apparatus 1 preferentially further comprises an illumination pattern input unit 60 for inputting desired first and/or second illumination patterns. The illumination pattern input unit 60 can be a receiving unit for receiving pre-designed illumination patterns from, for example, an USB stick, an Internet connection, another computer, a database, et cetera. The illumination pattern input unit 60 can also be adapted to allow a user to select the first and/or second illumination pattern from a group of pre-designed illumination patterns e.g. via a computer or another user interface such as a remote control. Moreover, the illumination pattern input unit 60 can comprise a graphical user interface allowing a user to design desired first and/or second illumination patterns e.g. such as an electronic writing board.

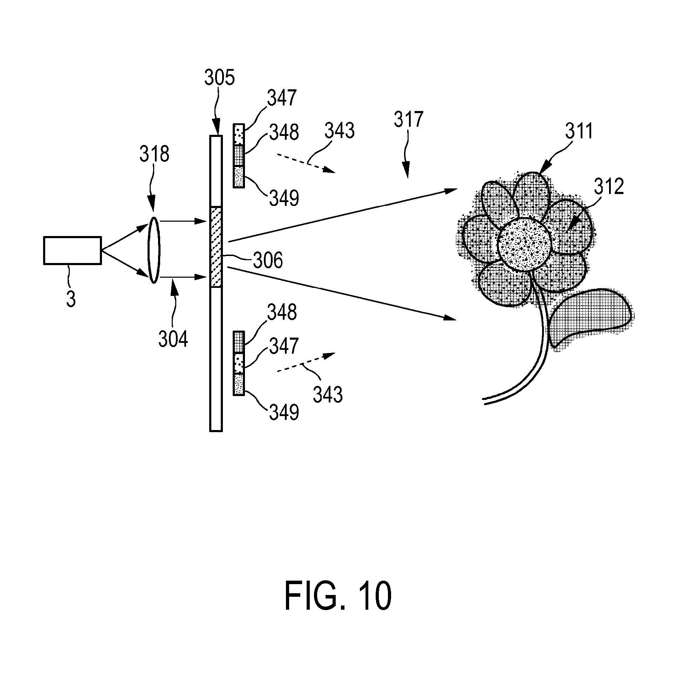

In a further embodiment, the second light device and the optical medium can be arranged such that the second light device is located between the object and the optical medium as schematically and exemplarily shown in Fig. 10. In Fig. 10 the second light device comprises several second light sources 347, 348, 349 emitting second light beams 343 having different colors. The second light source 347 preferentially emits a red color, the second light source 348 preferentially emits a blue color, and the second light source 349 preferentially emits a green color. The second light sources 347, 348, 349 are preferentially LEDs. The second light device comprising the second light sources 347, 348, 349 is arranged between the optical medium 305 and the object such that the second light beam 343 illuminates the object without meeting the diffractive optical element 306. The first light device comprises a first light source 3 being a laser emitting laser light as the first light beam. The laser light is collimated by a lens 318 and the collimated laser light 304 is directed onto the diffractive optical element 306 of the optical medium 305 for generating a first illumination pattern 311. The second light source comprising the second light sources 347, 348, 349 generate a second illumination pattern 312. The diffracted laser light 317 writes contours with sharp lines, wherein the contours describe an object like a flower. The second illumination pattern 312 provides colors filling out the contours. The first and second illumination patterns 311, 312 complement therefore each other and form a complemented image.

In Fig. 10 the laser light traverses the optical medium and the second light source is arranged in front of the optical medium, i.e. the laser source and the second light device are arranged on opposite sides of the optical medium, thereby avoiding light produced by the second light source going through the optical medium. However, light produced by the second light device going through the optical medium can also be avoided if the first light device and the optical medium are arranged such that light being reflected from the diffractive optical element is used for generating the first illumination pattern for illuminating the object. In such a reflective mode, the first light device and the second light device can be arranged on the same side of the optical medium, wherein the light of the second light device preferentially directly illuminates the object, whereas the light of the first light device is directed to the optical medium and the light reflected by the diffractive optical element of the optical medium generates the first illumination pattern for illuminating the object.

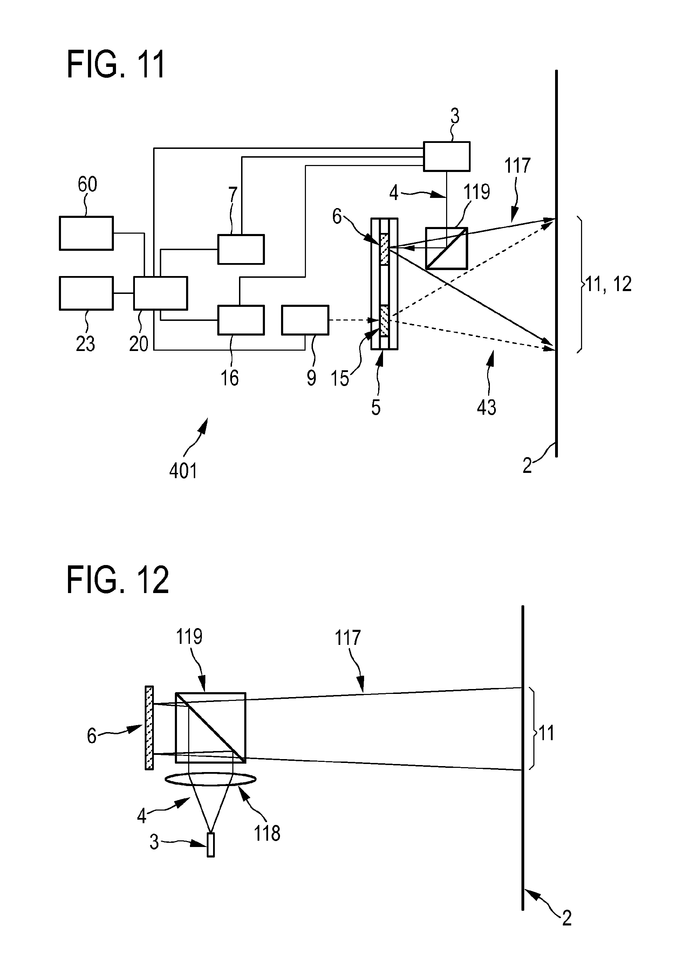

In the following an embodiment of an illumination apparatus 401 will be described, which is operated in a reflective mode, i.e. in a mode in which the first illumination pattern is generated by a reflected first light beam which has been reflected by the diffractive optical element, with reference to Fig. 11. Units and elements which are similar in Figs. 1 and 11 are indicated by similar reference signs. The first light beam light 4 generated by the first light device 3 is redirected to the diffractive optical element 6 via a redirection element 119. The first light beam is reflected by the diffractive optical element 6 and the reflected first light beam 117 is directed to the object 2 for generating the first illumination pattern 11 on the object 2. The generation of the second illumination pattern 12 is similar to the generation of the second illumination pattern described above with reference to Fig. 1. However, in a further embodiment, the reflective mode regarding the first light beam can also be combined with other kinds of generating the second illumination pattern like the kinds described above with reference to Figs. 9 and 10.

An arrangement of some elements of the illumination apparatus for being used in a reflective mode is schematically and exemplarily shown in more detail in Fig. 12. As can be seen in Fig. 12, the first light beam 4 generated by the first light device 3 is collimated by the lens 118 and redirected onto the reflective diffractive optical element 6 by a redirection element 119. The reflected and diffracted light beam 117 traverses the redirection element 119 and generates the first illumination pattern 11 on the object 2.

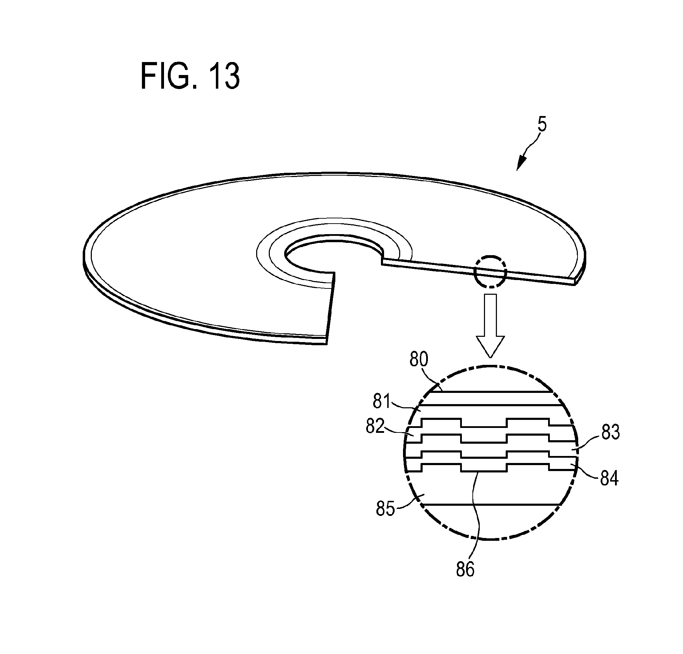

If the illumination apparatus is adapted to be used in a transmissive mode, the optical medium does not comprise a reflecting layer like an aluminum layer. However, if the illumination apparatus is adapted to be used in a reflective mode, the optical medium comprises the reflecting layer. Fig. 13 shows schematically and exemplarily a cross section of the optical medium 5. As can be seen in Fig. 13, the optical medium 5 is comprised of several layers in following sequence: a protective layer 80, a reflective layer 81, a dielectric layer 82, a recording layer 83, a further dielectric layer 84 and a polycarbonate disc substrate 85. Also pregrooves 86 are shown in Fig. 13. If the illumination apparatus is used in the transmissive mode, the optical medium 5 does not comprise the reflective layer 81. The pregrooves 86 are optional, i.e. the optical medium can also not comprise the pregrooves 86.

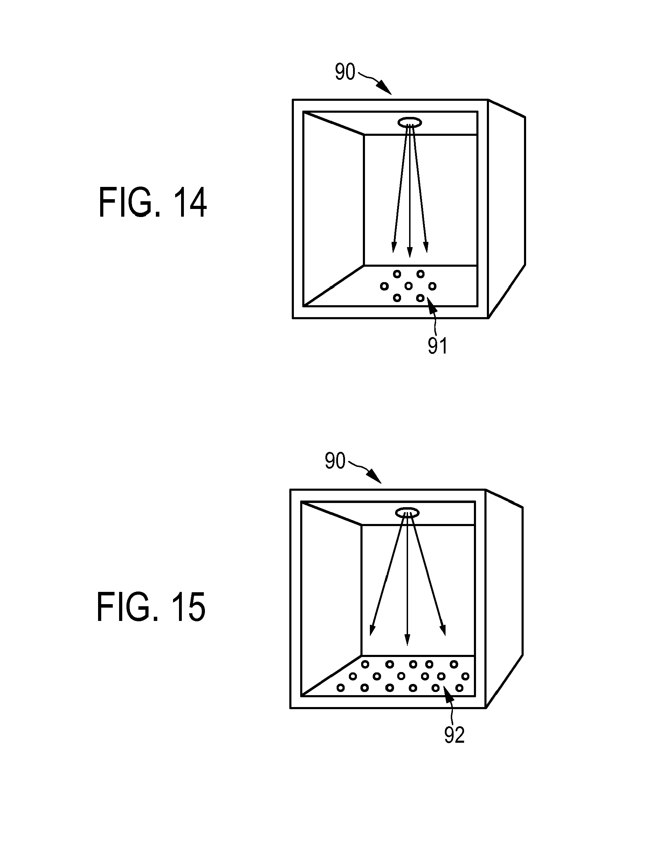

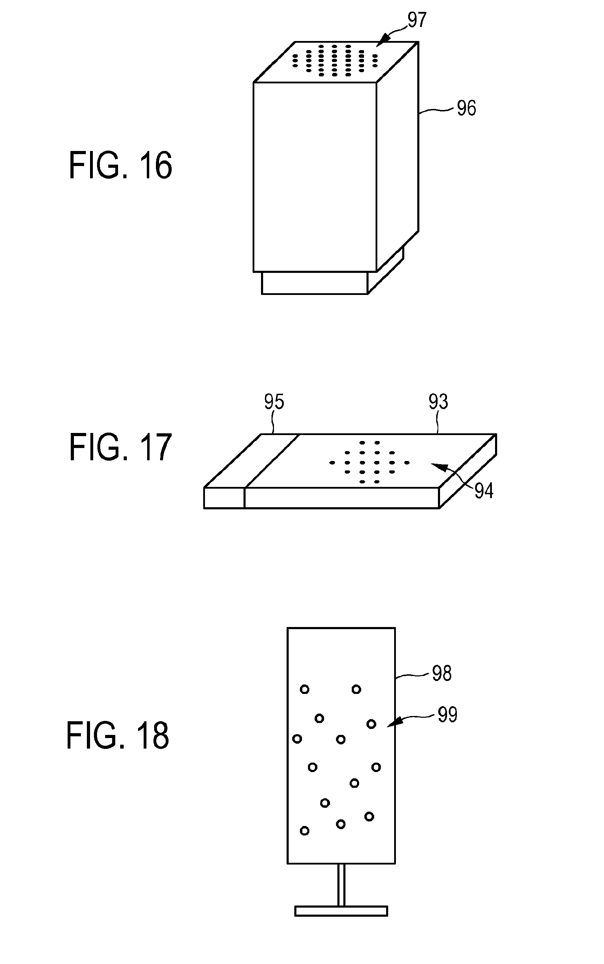

Figs. 14 to 18 show preferred uses of the illumination apparatus. Fig. 14 shows schematically and exemplarily the use of the illumination apparatus in a product display 90, wherein an illumination pattern 91 is generated on an inner side of the product display 90. In Fig. 14 an illumination pattern 91 is shown, which is different to the illumination pattern 92 shown in Fig. 15, which shows the same product display 90. These different illumination patterns 91, 92 can be achieved, for example, by replacing the diffractive optical element used for generating the illumination pattern. Fig. 16 shows schematically and exemplarily a product presentation stand 96 comprising an upper surface 97, which is transparent for the generated illumination pattern. The illumination apparatus is located inside the product presentation stand 96 and the first illumination pattern is generated on the inner side of the transparent surface 97. Fig. 17 shows schematically and exemplarily a shelf 93 on which, for example, a product can be placed. The illumination apparatus is preferentially arranged inside the shelf 93, and the upper surface 94 shown in Fig. 17 is transparent for allowing an illumination pattern generated within the shelf to be seen outside the shelf. The illumination apparatus is preferentially arranged in a part 95 at the edge of the shelf 93. Fig. 18 shows schematically and exemplarily a luminaire or lamp 98, wherein the illumination apparatus is located inside this luminaire or lamp 98. Also this luminaire or lamp 98 comprises a transparent surface 99 for allowing the generated illumination pattern to leave the luminaire or lamp 98.

Although with reference to Figs. 14 to 18 the illumination apparatus has been described as being located within the product display, shelf, product presentation stand and luminaire or lamp, respectively, the illumination apparatus can also be regarded as comprising these elements, wherein the further elements of the illumination apparatus like the first light device and the optical medium are preferentially located within these elements, i.e. within the product display, the shelf, the product presentation stand and the luminaire or lamp, respectively.

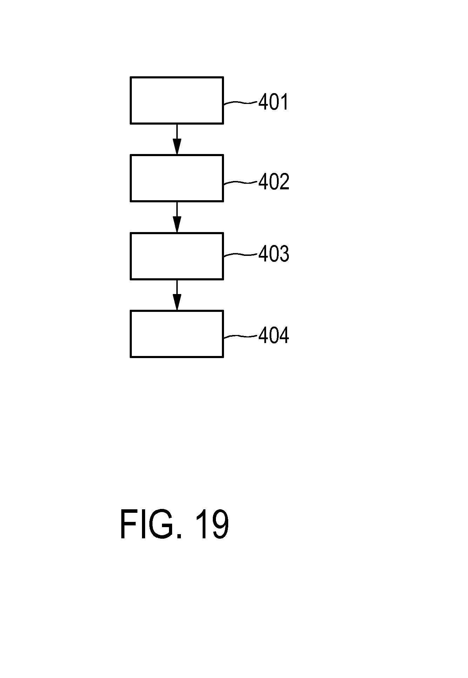

In the following an illumination method for illuminating an object with an illumination pattern will exemplarily be described with reference to a flowchart shown in Fig. 19.

In step 401, a diffractive optical element is calculated depending on a predefined first illumination pattern. The diffractive optical element is adapted to generate the predefined first illumination pattern for illuminating the object, when the diffractive optical element is illuminated with a light beam. Preferentially, the diffractive optical element calculator 7 calculates a CGH as diffractive optical element, wherein the predefined first illumination pattern is Fourier transformed.

In step 402, an imaging pattern is calculated depending on a predefined second illumination pattern, wherein the imaging pattern is adapted such that the second illumination pattern is generated, if the imaging pattern is illuminated by the second light beam of the second light device. Preferentially, the imaging pattern calculator 16 calculates the imaging pattern, wherein the predefined second illumination pattern is Fourier transformed.

In step 403, the calculated diffractive optical element and the calculated imaging pattern are written onto an optical medium by using the first light device of the illumination apparatus. After the writing procedure has been completed, a first light beam of the first light device is directed to the diffractive optical element for generating the first illumination pattern on the object, and a second light beam of the second light device is directed to the imaging pattern for generating the second illumination pattern on the object.

If the illumination apparatus is adapted to illuminate the object directly by a second light beam of a second light device, wherein the second light beam does not traverse the optical medium or only traverses a blank part of the optical medium, step 402 can be omitted, in step 403 only the diffractive optical element is written, and in step 404 a second light beam of the second light device does not traverse an imaging pattern of the optical medium.

Although in the above described embodiments the illumination apparatus and the illumination method allow to write the optical medium and to generate illumination patterns by directing light to the optical medium, the writing and illumination functionalities can also be distributed over separate apparatuses and methods. In particular, an illumination apparatus and method for illuminating an object with an illumination pattern can be provided, wherein the illumination apparatus and illumination method provide the functionality of illuminating the object with a first light pattern and/or second light pattern, but do not allow writing an optical medium. Such an illumination apparatus does not comprise, for example, the above mentioned diffractive optical element calculator 7, imaging pattern calculator 16, illumination pattern input unit 60 and the input unit 23. Moreover, in the corresponding illumination method steps 401 to 403 are omitted, and an optical medium already comprising at least a diffractive optical element is provided instead. An optical medium writing apparatus, which provides the functionality of writing at least the diffractive optical element onto the optical medium and which does not allow illuminating the object with at least the first illumination pattern, does preferentially not comprise the second light device. A corresponding optical medium writing method does preferentially not comprise the step of directing the first light beam and optionally also the second light beam to the optical medium for generating a first illumination pattern and optionally also a second illumination pattern for illuminating the object, i.e. such a method does preferentially not comprise step 404.

Although in the embodiments described above with reference to Figs. 1 and 11 the illumination apparatus comprises a first light device and a second light device, the illumination apparatus can also be adapted to generate only a first light pattern, without generating a second light pattern, i.e. in an embodiment the illumination apparatus does not comprise a second light device and an imaging pattern calculator.

Although in the above described embodiments certain optical elements have been described for influencing the light of the illumination apparatus and the optical medium writing apparatus, the illumination apparatus and/or the optical medium writing apparatus can comprise further optical elements for influencing the light, for example, further lenses and reflectors for producing desired lighting effects on the object.

The illumination apparatus can be adapted to produce various lighting effects which can be used in hospitality applications such as in hotels and restaurants as well as in atmosphere creation at homes, hospitals, museums and in, preferentially interactive, shop lighting concepts. In particular for these applications, the illumination apparatus can be adapted to produce intense light patterns by using one or several laser sources of the first light device superimposed on a background illumination, which can be generated by the second light device comprising preferentially one or several LEDs, to produce patterns and images which can be static as well as changing scenes. Laser sources have extremely high energy densities and are highly suitable for producing visible patterns and shapes using the diffractive optical element. LEDs on the other hand have high light output and can be used for background illumination.

The illumination apparatus can also be a part of a Gobo projector, and it can be used in consumer electronics or toys. It can also be used in furniture such as semitransparent chairs, tables, cupboards, et cetera. The illumination apparatus can be adapted to be used for entertainment purposes, for example, in a disco.

Although in the above described embodiments the optical medium comprises only one diffractive optical element and optionally also one imaging pattern, the optical medium can also comprise more than one diffractive optical element and/or more than one imaging pattern.

Although in the above described embodiments the optical medium is preferentially an optical disc, the optical medium can also have another shape. Moreover, although in the above mentioned embodiment the optical medium is preferentially rotated for writing purposes and for arranging the diffractive optical element in the light beam for generating the first illumination pattern, the optical medium can also be placed on an x-y stage, which is moveable into orthogonal directions in a two-dimensional plane, for moving the optical medium as desired during writing or during generating the first illumination pattern. It is also possible that the optical medium is not moved, but that only the position of the light used for writing and/or generating the first illumination pattern is modified for writing on different areas on the optical medium and/or for illuminating different parts of the optical medium for generating first illumination patterns.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Calculations like the calculation of the diffractive optical element and the imaging pattern performed by one or several units or devices can be performed by any other number of units or devices. For example, steps 401 and 402 can be performed by a single unit or by any other number of different units. The calculations and/or the control of the illumination apparatus in accordance with the illumination method and/or the control of the optical medium writing apparatus in accordance with the optical medium writing method can be implemented as program code means of a computer program and/or as dedicated hardware.

A computer program may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

The invention relates to an illumination apparatus for illuminating an object with an illumination pattern, in particular for decorative lighting. The apparatus comprises a first light device for generating a first light beam and an optical medium comprising a diffractive optical element, wherein the diffractive optical element is adapted to generate a first illumination pattern and wherein the first light device and the optical medium are arranged such that the first light beam is directed to the diffractive optical element for generating the first illumination pattern on the object. A diffractive optical element can be written onto an optical medium such that the diffractive optical element has sub-micron features, thereby allowing to increase the spatial resolution of the illumination on the object in comparison to using a LC-SLM or a LCoS for illuminating an object.

## Claims

1. An illumination apparatus for illuminating an object (2) with an illumination pattern, the illumination apparatus (1) comprising:
- a first light device (3) for generating a first light beam (4),
- an optical medium (5) comprising a diffractive optical element (6), wherein the diffractive optical element (6) is adapted to generate a first illumination pattern (11), wherein the first light device (3) and the optical medium(5) are arranged such that the first light beam (4) is directed to the diffractive optical element (6) for generating the first illumination pattern (11) on the object (2).

2. The illumination apparatus as defined in claim 1, wherein the illumination apparatus (1) comprises a diffractive optical element calculator (7) for calculating the diffractive optical element (6) depending on a predefined first illumination pattern, wherein the first light device (3) is adapted to write the diffractive optical element (6) onto the optical medium (5).

3. The illumination apparatus as defined in claim 1, wherein the illumination apparatus (1) further comprises a second light device (9) generating a second light beam (10) for illuminating the object (2) with a second illumination pattern (12).

4. The illumination apparatus as defined in claim 3, wherein the second light device (9) and the optical medium (5) are arranged such that the second light beam (10) illuminates the object (2) without meeting the diffractive optical element (6).

5. The illumination apparatus as defined in claim 3, wherein the optical medium (5) comprises a first part (13) comprising the diffractive optical element (6) for being illuminated by the first light beam (4) and a second part (14) for being illuminated by the second light beam (10).

6. The illumination apparatus as defined in claim 5, wherein the second part (14) comprises an imaging pattern (15) for generating an image on the object (2) as the second illumination pattern (12), if the second part (14) is illuminated by the second light beam (10).

7. The illumination apparatus as defined in claim 6, wherein the illumination apparatus (1) comprises an imaging pattern calculator (16) for calculating the imaging pattern depending on a predefined second illumination pattern, wherein the first light device (3) is adapted to write the imaging pattern (15) onto the optical medium (5).

8. The illumination apparatus as defined in claim 5, wherein the second light device is adapted to generate several second light beams having different colors, which are directed to the second part of the optical medium for generating a colored illumination of the object as the second illumination pattern.

9. The illumination apparatus as defined in claim 8, wherein the second part of the optical medium comprises several scattering patterns corresponding to the several second light beams having different colors, wherein the illumination apparatus further comprises several projection lenses corresponding to the several second light beams, wherein each projection lens is adapted to project the corresponding second light beam onto the object, after having traversed the corresponding scattering pattern.

10. An optical medium writing apparatus, the optical medium writing apparatus comprising:
- a diffractive optical element calculator for calculating a diffractive optical element depending on a predefined first illumination pattern, the diffractive optical element being adapted to generate the predefined first illumination pattern for illuminating an object, when the diffractive optical element is illuminated with a light beam,
- a light device for writing the diffractive optical element onto the optical medium.

11. An illumination method for illuminating an object (2) with an illumination pattern, the illumination method comprising:
- generating a first light beam (4) by a first light device (3),
- providing an optical medium (5) comprising a diffractive optical element (6), wherein the diffractive optical element (6) is adapted to generate a first illumination pattern (11),
- directing the first light beam (4) to the diffractive optical element (6) for generating the first illumination pattern (11) on the object (2).

12. An optical medium writing method, the optical medium writing method comprising:
- calculating a diffractive optical element depending on a predefined first illumination pattern, the diffractive optical element being adapted to generate the predefined first illumination pattern for illuminating an object, when the diffractive optical element is illuminated with a light beam, by a diffractive optical element calculator,
- writing the diffractive optical element onto the optical medium by a light device.

13. An illumination computer program for illuminating an object with an illumination pattern, the computer program comprising program code means for causing an illumination apparatus as defined in claim 1 to carry out the steps of the illumination method as defined in claim 11, when the computer program is run on a computer controlling the illumination apparatus.

14. An optical medium writing computer program, the computer program comprising program code means for causing an optical medium writing apparatus as defined in claim 10 to carry out the steps of the optical mediumwriting method as defined in claim 12, when the computer program is run on a computer controlling the optical medium writing apparatus.
